# EUROPEAN PATENT SPECIFICATION

(11) **EP 3 807 082 B1**
(45) Date of publication and mention of the grant of the patent: **04.10.2023**
(21) Application number: 19737905.0
(22) Date of filing: 11.06.2019
(51) Int. Cl.: B29D 30/26, B29D 30/20, F16D 1/108

(54) **PROCESS AND APPARATUS FOR BUILDING TYRES**
VERFAHREN UND VORRICHTUNG ZUR HERSTELLUNG VON REIFEN
PROCÉDÉ ET APPAREIL POUR LA FABRICATION DE PNEUMATIQUES

(30) Priority: 15.06.2018 IT 201800006352
(43) Date of publication of application: 21.04.2021
(73) Proprietor: Pirelli Tyre S.p.A., 20126 Milano (IT)
(72) Inventor: DE COL, Christian, 20126 Milano (IT)
(74) Representative: Zermani Biondi Orsi, Umberto
(86) International application number: PCT/IB2019/054842
(87) International publication number: WO 2019/239300

(56) References cited:
- FR-A- 1 498 038
- JP-A- 2001 232 693
- KR-A- 20090 029 859
- US-A- 4 780 171
- US-A1- 2006 001 312

## Description

The present invention regards a process and an apparatus for building tyres, as well as a holding device for a forming drum in a plant for building tyres.

More particularly, the invention is aimed for the process and equipment used for moving the carcass structure and/or the belt structure of the tyre during the steps of building the green tyre, subsequently to be subjected to a vulcanisation cycle for the obtainment of the final product.

A tyre for vehicle wheels generally comprises a carcass structure comprising at least one carcass ply having respectively opposite end flaps engaged with respective anchoring annular structures, integrated in the zones normally identified with the name of "beads", having an inner diameter substantially corresponding to a so-called "fitting diameter" of the tyre on a respective mounting rim.

The carcass structure is associated with a belt structure which can comprise one or more belt layers, situated in radial superimposition with respect to each other and with respect to the carcass ply, having textile or metallic reinforcement cords with cross orientation and/or substantially parallel to the circumferential extension direction of the tyre (at 0 degrees). In radially external position with respect to the belt structure, a tread band is applied, it too made of elastomeric material like other semifinished products constituting the tyre.

Respective sidewalls made of elastomeric material are also applied in axially external position on the lateral surfaces of the carcass structure, each extended from one of the lateral edges of the tread band up to the respective anchoring annular structure to the beads. In the tyres of "tubeless" type, an air-impermeable covering layer, usually termed "liner", covers the internal surfaces of the tyre.

Following the building of the green tyre actuated by means of assembly of respective components, a moulding and vulcanisation treatment is generally executed, aimed to determine the structural stabilisation of the tyre by means of crosslinking of the elastomeric compositions as well as imparting on the same, where requested, a desired tread design and possible distinctive graphical signs at the sidewalls of the tyre. By elementary semifinished product, it is intended a continuous elongated element or strip made of elastomeric material. Preferably said strip is cut to size. More preferably said strip can comprise one or more metallic, textile or hybrid cords parallel to each other and arranged according to the longitudinal direction of said strip.

The terms "radial" and "axial" and the expressions "radially internal/external" and "axially internal/external" are used by referring to the radial direction of a holding device or of a forming drum (i.e. to a direction perpendicular to the rotation axis of the forming drum or of the holding device) and to the direction of the rotation axes of the forming drum or of the holding device. A radial plane of the forming drum or of the holding device contains the respective rotation axis thereof. With the term "radial pin" it is intended any one element, preferably but not necessary oblong, moveable/displaceable along a direction which has at least one radial component so as to be engaged and disengaged with/from another element, e.g. from a rotating shaft of a forming drum.

With the term "radial slot" it is intended an opening which, independent of its axial extension, has a radial depth such to allow the insertion of an end portion of an element, e.g. of a radial pin.

With the expression "angular positioning" it is intended the obtainment of a predetermined mutual angular orientation between two elements, which can be actuated before, during or at the end of the insertion of a free end of one in the housing seat of the other.

In the modern-design production plants, it is often required that the components of the carcass structure and/or of the belt structure, along with other structural elements of the tyre, are made and/or assembled together by means of deposition of elementary semifinished products on a forming drum, while the latter is driven in rotation around an axis thereof. During the processing, the forming drum can also be suitably spatially moved and/or oriented, e.g. in order to suitably distribute - with respect to the outer surfaces of the forming drum - the elementary semifinished product coming from a dispensing device.

The documents WO2010070374 and WO2011148283, on behalf of the same Applicant, illustrate the use of robotic arms for moving a forming drum into one or more building stations, as well as for the transfer of the same from one building station to the other.

KR20090029859 illustrates a device for driving a forming drum couplable to a robot. A support group rotatably carries a drive shaft having at one end a seat suitable for receiving a frustoconical end of a rotating shaft carried by the forming drum. The drive shaft is associated with a gripping unit having a slider subjected to the action of elastic elements, the action thereof entrusted with the holding of the frustoconical end of the forming drum. A fluid-dynamic actuator fixed coaxially with the support unit on the opposite side with respect to the forming drum can be activated for axially pushing the slider so as to determine the uncoupling of the rotating shaft of the forming drum from the seat of the drive shaft. The rotation of the forming drum is actuated by a laterally-arranged electric motor, connected by means of a belt to a pulley fit on the drive shaft on the opposite side with respect to the fluid-dynamic actuator.

The applicant deems that a necessary condition for a good outcome of the processing is that the forming drum be removably constrained to the robotic arm such that its connection is simple and quick, so as to maximise the productivity, but at the same time the angular position thereof is governable with high precision.

The applicant has nevertheless identified several critical issues in the devices of the type described in KR20090029859, in terms of size and production speed.

In particular, the applicant has observed that large size and an unfavourable distribution of the weights of the structure render such devices not very suitable for use in combination with a robotic arm.

In particular, the applicant has observed that the presence of belt transmission systems involves a high shear stress and also introduces position imprecisions, which can limit the operative speed range of the forming drum.

In addition, the presence of a complex holding structure, with external jacket completely enclosing the rotatable portion constrained to the forming drum, is translated into an increase of the weights and stresses that are not compatible with an always-greater increase of the production speeds.

On such matter, therefore, the applicant has evaluated that it would be desirable to provide a holding device that is capable of limiting the weights and the sizes, thus making the necessary holding force compatible with a high production capacity.

The applicant has also observed that the devices of the type illustrated in KR20090029859 base their action of tightening on the shaft of the forming drum only on the friction generated between the peripheral surface of the shaft and the inner surface of the housing seat thereof.

Such action is therefore linked not only to the holding force of the shaft, proportional to the friction force, but also and above all to the precision in the surface coupling between the shaft of the forming drum and its housing seat in the holding device.

In relation to the latter aspect, the applicant has also observed that, even if the sizing and surface treatment of the two components can be optimised, the wear which tends to occur in the devices used and the high loads at play in fact make it impossible to perfectly mate the two surfaces, reducing the actual contact area between the same to a finite (sometimes limited) number of points.

All of the holding stress of the shaft is therefore concentrated on such points, which facilitates the onset of relative sliding between the shaft and the holding device when strong accelerations and decelerations occur.

Such coupling is therefore inefficient under the action of high accelerations and even more critical decelerations due for example to an emergency stopping of the holding device.

The applicant has therefore identified that such criticality is quite in contrast with the current trends of the field, in which productivity and speed at play are ever-increasing.

The applicant has subsequently perceived that the maintenance of the relative position between the forming drum and the holding device plays a key role in the coupling with the rotating shaft of the forming drum.

More precisely, the applicant has found that the use of systems that actively limit the sliding between the forming drum and the holding device simplifies a correct coupling with the rotating shaft of the forming drum and facilitates the maintenance of a precise angular positioning also with respect to sudden stops and accelerations of the rotation of the forming drum.

More particularly, in accordance with a first aspect, the invention regards an apparatus for building tyres according to independent claim 1.

The applicant deems that in such a manner it is possible not only to efficiently hold the forming drum on the movement unit, but also facilitate the precision of the angular positioning between forming drum and holding device, preventing sliding and improving the building accuracy.

In accordance with a second aspect, the invention refers to a process for building tyres according to independent claim 10.

The applicant deems that in such a manner it is possible to constrain the forming drum to its holding device (or movement unit) along the axial direction and the circumferential direction in a quick and efficient manner.

According to a further aspect the present invention regards a holding device for a forming drum in an apparatus for building tyres according to independent claim 15.

In at least one of the aforesaid aspects, the invention comprises one or more of the following preferred characteristics that are described hereinbelow.

Preferably, the anti-rotation unit comprises at least one radial pin slidably inserted in the first element of the rotatable body to move between a radially extracted position, corresponding to said passive condition, and a radially inserted position, corresponding to said active condition.

Advantageously, in such a manner, the applicant deems to have optimised the solution effectiveness and simplicity.

Preferably, in the radially extracted position, the radial pin is situated in radially external position with respect to said housing axial seat of the first element.

Preferably, the anti-rotation unit comprises an actuation mechanism associated with said radial pin in order to displace it between the radially extracted position and the radially inserted position.

Preferably, the actuation mechanism comprises at least one axial thrust element associated with said second element of the rotatable body and connected to the radial pin in a manner such that an axial translation of the axial thrust element imparts a radial translation to said radial pin.

Preferably, the actuation mechanism is configured for displacing the radial pin from the radially extracted position to the radially inserted position during the axial displacement of the second element of the rotatable body from the second axial position to the first axial position.

Advantageously, in such a manner, the applicant deems to have maximised the actuator efficiency, which is actuated to simultaneously move the second element into the second position (release condition) and the radial pin into radially extracted position.

Preferably, the axial thrust element is axially constrained to the second element.

Preferably, the axial thrust element and the radial pin are slidably connected by means of a coupling comprising a linear guide tilted with respect to said rotation axis and a slider slidably constrained to the guide.

Preferably, said guide is located on the axial thrust element and the slider is located on the radial pin or vice versa.

Preferably, the axial thrust element and the radial pin are connected by means of a leverage configured to transmit to the radial pin a radial movement in response to an axial sliding of the axial thrust element.

Preferably, the rotating shaft of the forming drum has at least one radial slot shaped for receiving an end portion of the radial pin at its interior.

Preferably, the radial slot has an axial extension greater than an axial dimension of said radial pin so as to allow an axial displacement of said rotating shaft in an end section of the displacement of the radial pin from the radially extracted position to the radially inserted position.

Preferably, said (radially internal) end portion of the radial pin is at least partly smoothed or tapered in order to facilitate the insertion in the radial slot.

In other words, said at least one radial pin has a bevelled end portion.

Advantageously, in such a manner, the insertion of the radial pin is facilitated and a precision positioning of the rotating shaft is allowed, whose angular position can be corrected by the action of the radial pin.

Preferably, moreover, the radial slot of the rotating shaft of the forming drum has a corresponding flared outer edge for the purpose of defining an opening for the insertion of the radial pin. Preferably, the action of displacing said anti-rotation unit from said passive condition to said active condition occurs by inserting - along a radial direction - at least one radial pin in the first element of the rotatable body and in at least one radial slot of the rotating shaft of the forming drum.

Preferably, the radial pin is inserted into the first element and into the rotating shaft when the second element is situated in an intermediate position between the second and the first position. Preferably, an angular positioning is provided between the rotating shaft of the forming drum and the first element of the rotatable body.

Preferably, the angular positioning comprises a preliminary positioning, in which the rotating shaft and the movement unit are angularly rotated with respect to each other around said rotation axis to move said radial slot to an angular position approximately corresponding to a angular position of said radial pin.

Preferably, the angular positioning comprises a precision positioning in which said radial slot and said radial pin are mutually aligned along a radial direction.

Preferably, the precision positioning is carried out when the second element is situated in an intermediate position between the second and the first position.

Preferably, the precision positioning is carried out by said radial pin.

Preferably, the precision positioning is carried out during the radial movement of the radial pin by means of mechanical interference between a smoothed end portion of the radial pin and an outer edge, preferably flared, of the radial slot. Preferably, the anti-rotation unit comprises a plurality of radial pins angularly spaced from each other around said rotation axis. Preferably, the rotating shaft comprises a plurality of radial slots. Preferably, the housing axial seat of the first element is conical-shaped and said rotating shaft of the forming drum has a coupling portion counter-shaped with respect to said housing axial seat.

Preferably, moreover, the motor of the holding device comprises a rotor coaxial with a stator and rigidly constrained to the first element of the rotatable body, coaxially thereto. Advantageously, the applicant deems to have thus obtained a holding device that is particularly compact and simple to move. Preferably, the rotatable body extends radially, moving away from the rotation axis between a central portion and a peripheral portion, radially external with respect to said central portion. Preferably, the motor is constrained to the first element at the central portion and the actuator is operatively active on the second element at the peripheral portion.

Preferably, the actuator comprises one or more pushing elements arranged in a radially external position with respect to the central portion of the rotatable body and axially moveable between an inoperative position and an operative position, in which they keep the second element in the second axial position. Preferably, said actuator comprises one or more pushing elements axially moveable between an operative position and an inoperative position, in which they are axially spaced from said second element.

Advantageously, in such a manner, the applicant has remedied the need to provide seals capable of following the rotation of the forming drum, with consequent increase of the operative speeds. Preferably, the fixed body and the rotatable body of the holding device are rotatably connected to each other by means of at least one bearing or thrust bearing.

More preferably, the bearing or thrust bearing is axially interposed between the housing axial seat of the first element and the motor.

Advantageously, in such a manner, the structure of the holding device is particularly compact and handy.

Preferably, the first element of the rotatable body is arranged cantilevered with respect to said bearing or thrust bearing. Preferably, said rotatable body of the holding device extends, along said rotation axis, from said housing axial seat of the first element to said motor.

Advantageously, in such a manner, the structure of the holding device is particularly compact and handy.

Further characteristics and advantages will be more evident from the detailed description of a preferred but not exclusive embodiment of a process and an apparatus for building tyres, as well as of a holding device for a forming drum in an apparatus for building tyres, in accordance with the present invention. Such description will be set forth hereinbelow with reference to the enclosed drawings, provided only as a non-limiting example, in which:
- figure 1 shows a perspective view of a holding device for a forming drum in an apparatus for building tyres in accordance with the present invention, according to a first embodiment;
- figures 2 and 3 show respective longitudinal section views of the holding device of figure 1 in two different operative positions;
- figures 4 to 6 show respective longitudinal section views of a second embodiment of a holding device for a forming drum in an apparatus for building tyres in accordance with the present invention, in three different operative positions;
- figure 7 shows a schematic plan view of an apparatus for building tyres according to the present invention.

With reference to the enclosed figures, reference number 1 indicates an apparatus for building tyres, in particular tyres for vehicle wheels.

By means of the apparatus 1, the structural elements of the tyre are made and/or assembled together by means of deposition of elementary semifinished products on a forming drum 2.

The forming drum 2 therefore comprises an outer surface 3 extending around a central axis "A" thereof and at least one rotating shaft 4 extending along the central axis "A" up to a free end 4a thereof.

More precisely, the rotating shaft 4 is integral or integrally lockable with respect to the outer surface 3 in order to rotate it around the central axis "A".

In the preferred embodiment, the free end 4a of the rotating shaft comprises a neck or narrowing 4b ending with an end knob 4c.

The neck or narrowing 4b therefore has a lower radial extension than the end knob 4c.

As will be clarified hereinbelow, this defines a portion for holding the forming drum 2.

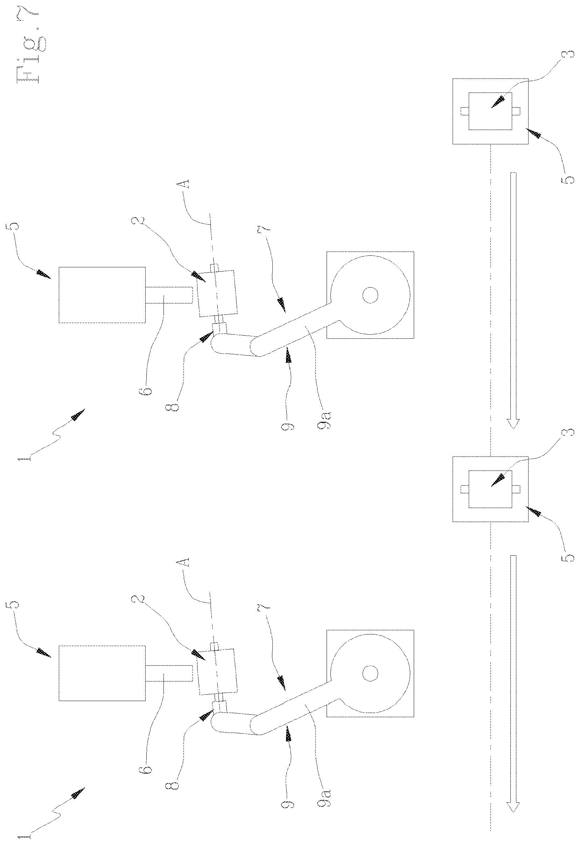

The forming drum 2, indeed, is actuated and suitably displaced, in rotation around the central axis "A" and is spatially oriented at one or more processing stations 5 (see figure 7).

The processing stations 5 can be of various type and preferably each comprises at least one processing unit 6 operatively active on the outer surface 3 of the forming drum 2.

Within the apparatus 1, the processing stations 5 can simultaneously operate on a respective tyre being processed (not illustrated) carried by a respective forming drum 2, sequentially transferred by a processing station 5 to the subsequent processing station.

In order to move the forming drum 2, the apparatus 1 comprises a movement unit 7 for displacing said forming drum 2 provided with at least one holding device 8.

More precisely, the movement unit 7 comprises a support structure 9 to which the holding device 8 is connected.

The support structure 9 can be of various type and is designed for supporting the forming drum 2 during the processing in the various processing stations 5.

Preferably, the support structure 9 is also moveable/displaceable between the various processing stations 5.

In the illustrated embodiment, the support structure 9 is at least partly defined by a robotic arm 9a.

More precisely, the robotic arm 9a is preferably of anthropomorphic type, having for example six, seven or more displacement axes.

The holding device 8 comprises a fixed body 10, a rotatable body 11 rotatably connected to the fixed body 10 so as to rotate around a rotation axis "B", and a motor 12 coupled to the rotatable body 11 to drive it in rotation around said rotation axis "B".

The motor 12 comprises a stator and a rotor 12a rotatable around a main axis "C" of the motor 12.

In use, i.e. when the forming drum 2 is coupled to the holding device 8, the rotation axis "B" corresponds to the central axis "A" of the rotating shaft 4.

In addition, preferably, said main axis "C" of the motor 12 is, in use, corresponding to said rotation axis "B".

Preferably, the fixed body 10 is rigidly constrained, if desired removably, to the support structure 9.

In the preferred embodiment, the fixed body 10 is constrained to the robotic arm 9a such that the rotatable body 11 defines the sixth or seventh displacement axis thereof.

The rotatable body 11 extends radially, moving away from the rotation axis "B" between a central portion 11a and a peripheral portion 11b, radially external with respect to the central portion 11a.

The motor 12 is preferably constrained to the central portion 11a. More preferably, the rotor 12a of the motor 12 is coaxially constrained to the rotatable body 11, at the central portion 11a.

More precisely, the rotatable body 11 comprises a first element 13 and a second element 15 mutually moveable along said rotation axis "B".

Preferably, the motor 12 (in particular the rotor 12a) is rigidly constrained to the first element 13, more preferably at a radially central portion 13c thereof.

The first element 13 is extended along said rotation axis "B" between a first axial end 13a, rotatably connected to the fixed body 10, and a second axial end 13b provided with a housing axial seat 14 configured (or shaped) for receiving the rotating shaft 4 of the forming drum 2.

Preferably, the housing axial seat 14 has a flared shape. Analogously, the rotating shaft 4 of the forming drum 2 has a coupling portion having tapered shape, counter-shaped with respect to said housing axial seat 14.

Advantageously, in such a manner the contact (and friction) surface between the rotating shaft 4 and the housing axial seat 14 is increased and maximised.

In the preferred embodiment, the coupling portion, preferably placed at the free end 4a of the rotating shaft 4, has substantially frustoconical shape.

The second element 15 is provided with at least one holding member 15a for holding said rotating shaft 4 and is moveable with respect to the first element 13 between a first axial position and a second axial position.

In the first axial position, the second element 15 holds the rotating shaft 4 of the forming drum 2 in the housing axial seat 14 of the first element 13.

In the second axial position, in an opposite manner, the second element 15 releases said rotating shaft 4 of the forming drum 2, allowing the extraction thereof from the housing axial seat 14.

In other words, in the first axial position, the second element 15 is positioned with respect to the first element 13 so as to be tightened on the free end 4a of the rotating shaft 4.

In the second axial position, however, the second element 15 is positioned with respect to the first element 13 so as to allow the free axial sliding of the rotating shaft 4 in the housing axial seat 14.

Preferably, the holding member 15a for holding the second element 15 comprises at least one collar 16 arranged coaxially with said rotation axis "B" (and with the rotating shaft 4 of the forming drum 2).

Said collar 16, at least in the first axial position of the second element 15, is shaped for being fit on the free end 4a of the rotating shaft 4 of the forming drum 2.

More precisely, the collar 16 is shaped so as to enclose at least the knob 4c and the neck 4b of the free end 4a.

In addition, the second element 15 comprises a gripping unit 17 associated with said collar 16.

The gripping unit 17 is radially moveable with respect to the collar 16 between an active position, in which it axially holds the free end 4a of the rotating shaft 4, and a rest position, in which it releases the free end 4a of the rotating shaft 4.

In particular, the gripping unit 17 is associated with the second element 15 so as to assume the active position when the second element 15 is in the first axial position and the rest position when the second element 15 is in the second axial position.

In detail, preferably the gripping unit 17 comprises a plurality of holding bodies 17a, preferably balls but also locking devices with radial jaws can be used that are angularly spaced and moveable between a position radially inside the collar 16, corresponding to the active position, and a radially external position, corresponding to the rest position.

Preferably, in the radially internal position the holding bodies 17a are coupled to the neck 4b of the free end 4a of the rotating shaft 4.

In the preferred embodiment, the first element 13 of the rotatable body 11 comprises a cam surface slidably associated with the gripping unit 17 and shaped for translating the holding bodies 17a between the radially internal position and the radially external position in response to a sliding of the second element 15, i.e. of the collar 16, between the first and the second axial position.

It is observed that the rotatable body 11 is rotatably connected to the fixed body 10 by means of at least one rolling body 20. Preferably, the rolling body 20 is a thrust bearing 20a, interposed between the first element 13 of the rotatable body 11 and the fixed body 10.

Therefore, considering that in use the holding device is generally positioned with rotation axis "B" substantially horizontal, the first element 13 of the rotatable body 11 is arranged cantilevered with respect to the rolling body 20 (i.e. to the thrust bearing 20a).

Preferably, therefore, the axial size of the holding device 8 is completely contained, along said rotation axis "B", between the housing axial seat 14 of the first element 13 of the rotatable body and the motor 12.

Advantageously this considerably simplifies the structure of the holding device 8 and reduces the size thereof.

In order to maintain the first element 13 and the second element 15 in the first axial position, the rotatable body 11 comprises at least one elastic retention element 18.

Such elastic retention element 18 is therefore operatively interposed between the first element 13 and the second element 15 and is configured and/or sized for maintaining the second element in the first axial position.

Preferably, the rotatable body 11 comprises a plurality of elastic elements 18.

Such elastic elements 18 are preferably angularly spaced from each other around the rotation axis "B", more preferably angularly equidistant from each other.

In the preferred embodiment, the elastic elements 18 are each defined by at least one helical spring 18a.

Preferably, said helical springs 18a have a turn with rectangular section such to allow a high force together with a camber such to allow the complete movement of the gripping unit 17.

The rotatable body 11 is therefore of "normally closed" type, i.e. it is maintained in a holding condition in the absence of external actions.

In order to oppose the action of the elastic elements 18, the holding device 8 comprises an actuator 19 operating between the first element 13 and the second element 15.

In other words, the actuator 19 is configured to oppose said at least one elastic retention element 18 and axially displace the second element 15 (with respect to the first element 13) from the first axial position to the second axial position.

In order to simplify the structure of the holding device 8, the actuator 19 is operatively active between the fixed body 10 and the rotatable body 11; more precisely, the actuator 19 is operatively active between the fixed body 10 and the second element 15 of the rotatable body 11.

Said actuator 19 therefore comprises a fixed portion 19a, constrained to the fixed body 10, and a moveable portion 19b associated with the second element 15.

Preferably, the actuator 19 is operatively active on a radially peripheral portion of the second element 15 (corresponding to the peripheral portion 11b of the rotatable body 11).

Preferably, a moveable portion 19b of the actuator comprises one or more pushing elements 29 arranged in a radially external position with respect to the central portion of the second element 15.

Such pushing elements 29 are axially moveable between an inoperative position and an operative position, in which they keep the second element 15 in the second axial position. Preferably, in the inoperative position the pushing elements 29 are axially spaced from the second element 15. Advantageously, in such a manner it is not necessary to provide for the presence of rotatable seals which ensure the airtight seal necessary for maintaining each pushing element 29 in operative position.

Preferably, the actuator 19 is of fluid-dynamic type, with pneumatic or hydraulic actuation.

More preferably, therefore, the fixed portion 19a is at least partly defined by a jacket and the moveable portion 19b (i.e. each pushing element 29) is at least partly defined by at least one piston axially slidable in the jacket between an axially retracted position, corresponding to the inoperative position, and an axially extracted position, corresponding to the operative position.

In the retracted position, the piston does not act on the rotatable body, allowing the at least one elastic element 18 to maintain the second element 15 in the first axial position.

It is observed that, when it is situated in the axially retracted position, the piston is placed at a predetermined axial distance from the second element 15 of the rotatable body. In other words, in the axially retracted position the piston is not in contact with the rotatable body 11.

Advantageously, in such a manner it is sufficient to provide for the use of seals which statically oppose the pressure within the jacket.

In the axially extracted position the piston acts on the second element 15 of the rotatable body 11, maintaining it in the second axial position.

Therefore, in the travel from the axially retracted position to the axially extracted position, the piston presses on the second element 15 (i.e. on the radially peripheral portion), moving it from the first to the second axial position.

Preferably, so as to be better adapted to the structure of the holding device 8, the actuator 19 has annular extension around said rotation axis "B".

More precisely, the piston (or moveable portion 19b) of the actuator 19 is annularly extended around the rotation axis "B" with continuity or with a plurality of single angularly-spaced elements.

According to one aspect of the present invention, the holding device 8 comprises at least one anti-rotation unit 21 selectively displaceable between an active condition, in which it rotatably constrains said rotating shaft 4 of the forming drum 2 and the first element 13 of the rotatable body 11, and a passive condition, in which it does not interfere with the rotating shaft 4 of the forming drum 2.

Advantageously, in such a manner, the positioning between the forming drum 2 and the holding device 8 is not only given by the action of the elastic elements 18 (together with the surfaces of the housing axial seat 14), but is assisted by the anti-rotation unit 21 which facilitates a satisfactory angular precision thereof. Preferably, the anti-rotation unit 21 comprises at least one radial pin 22 slidably inserted in the first element 13 of the rotatable body 11 in order to move between a radially extracted position, corresponding to said passive condition, and a radially inserted position, corresponding to said active condition.

The anti-rotation unit 21 is mechanically fixed to the moveable ring 11b. Such unit is easily removable such to be able to exclude the anti-rotation function that might not be necessary with the use of light drums with low inertia and which operate at a limited rotation speed.

Preferably, in the radially extracted position, the radial pin 22 is situated in a radially external position with respect to said housing axial seat 14 of the first element 13.

On the matter, preferably the rotating shaft 4 of the forming drum 2 has at least one radial slot 23 shaped for receiving an end portion 22a of the radial pin 22 at its interior. More precisely, the radial slot 23 is shaped for receiving a radially internal end portion 22a of the radial pin 22 at its interior. Preferably, the anti-rotation unit 21 comprises a plurality of radial pins 22 angularly spaced from each other around said rotation axis "B".

In accordance therewith, the rotating shaft 4 preferably comprises a corresponding plurality of radial slots 23.

The (or each) radial slot 23 has circumferential extension, i.e. a width, substantially corresponding to that of the respective radial pin 22, so as to ensure the rotational coupling between the holding device 8 and the rotating shaft 4 when the anti-rotation unit is in said active condition.

In addition, in order to facilitate a correct coupling and facilitate the precision of the angular positioning between the holding device 8 and the rotating shaft 4, the radial slot 23 preferably has an axial extension or dimension greater than an axial dimension of the radial pin 22, or at least of its end portion 22a. More precisely, in the preferred embodiment, the radial slot 23 is axially oblong and has main axial extension with respect to the radial and circumferential size.

In other words, there is the presence of an axial clearance between the radial pin 22 and the radial slot 23.

In such a manner, an axial displacement of the rotating shaft 4 with respect to the radial pin is allowed, in an end section of the displacement of the radial pin 22, from the radially extracted position to the radially inserted position.

Advantageously, this allows the radial pin 22 to be inserted in the radial slot 23 when the second element 15 of the rotatable body 11, and therefore the rotating shaft 4, has not yet reached the first axial position.

In such a manner, by making the radial pin 22, preferably smoothed at its end portion 22a, enter into the radial slot 23 before the second element 15 of the rotatable body 11 has reached the first axial position, it is possible to obtain a "fine" adjustment of the angular positioning of the rotating shaft 4, which is not yet tightened in the housing axial seat 14 of the first element 13. The synchronism between the axial displacement for gripping the forming drum 2 and the radial movement for inserting the radial pin 22 considerably facilitates the gripping of the forming drum 2, which is therefore free of possible points of mechanical interference between the holding device 8 and the forming drum 2.

Preferably, therefore, the (radially internal) end portion 22a of the radial pin 22 is at least partly smoothed or tapered so as to facilitate the insertion thereof in the radial slot 23 and the consequent rotation of the rotating shaft 4.

Preferably, moreover, the radial slot 23 of the rotating shaft 4 of the forming drum 2 has a corresponding flared outer edge for the purpose of defining an opening for the insertion of the radial pin 22.

In order to move the radial pin 22 between the radially extracted position and the radially inserted position, the anti-rotation unit 21 comprises an actuation mechanism 24 associated with the radial pin 22.

In particular, the actuation mechanism 24 is configured for moving the radial pin 22 from the radially extracted position to the radially inserted position during the axial displacement of the second element 15 of the rotatable body 11 from the second axial position to the first axial position.

More precisely, the actuation mechanism 24 comprises at least one axial thrust element 25 associated with the second element 15 of the rotatable body 11.

The axial thrust element 25 is connected to the radial pin 22 in a manner such that an axial translation thereof imparts a radial translation to the radial pin 22, i.e. at least one radial component.

Preferably, the axial thrust element 25 is connected to the second element 15 of the rotatable body 11, while the radial pin 22 is slidably constrained to the first element 13.

More preferably, the axial thrust element 25 is rigidly constrained to the second element 15.

In other words, the axial displacement of the axial thrust element 25 is constrained to that of the second element 15.

The actuator 19 of the holding device 8 and the elastic elements 18 impart, to the axial thrust element 25, thrusts and/or axial displacements, according to respectively opposite directions.

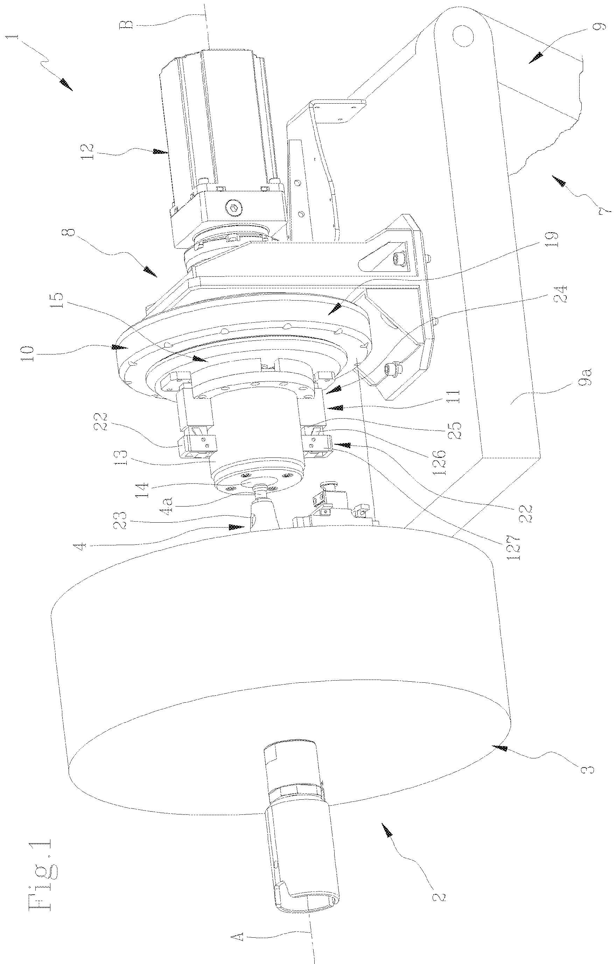

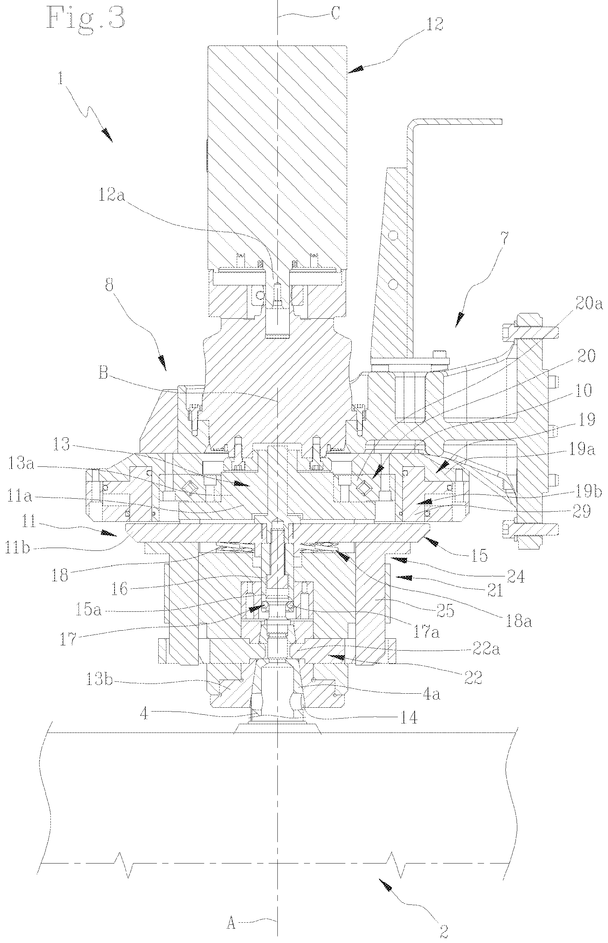

In a first embodiment (figures 1-3), the axial thrust element 25 and the radial pin 22 are slidably connected by means of a coupling comprising a linear guide 126 tilted with respect to said rotation axis "B" and a slider 127 slidably constrained to the guide 126.

Preferably, the guide 126 is located on the axial thrust element 25 and the slider 127 is made on the radial pin 22. Alternatively, in a non-illustrated embodiment, the positioning of the slider and of the guide could be reversed.

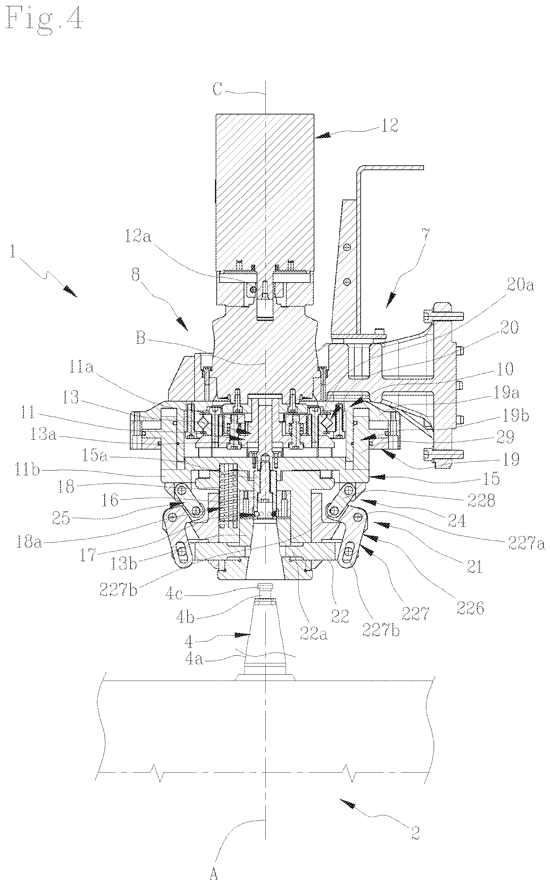

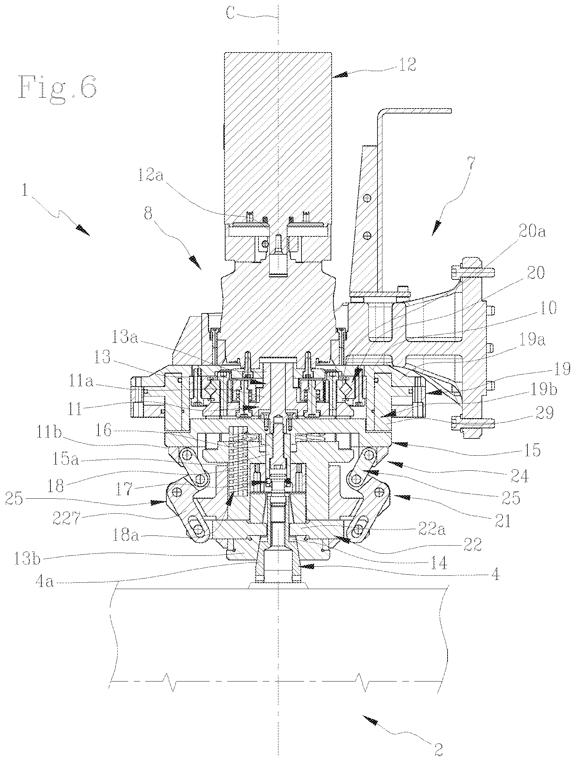

According to a further embodiment (figures 4-6), the axial thrust element 25 and the radial pin 22 are connected by means of a leverage 226 configured for transmitting, to the radial pin 22, a radial movement in response to an axial sliding of the axial thrust element 25.

In particular, the leverage 226 can comprise at least one bracket or other angled transmission element 227, provided with a pivot 227a rotatably connected to the first element 13 and a pair of pins 227b coupled respectively to the axial thrust element 25 and to the radial pin 22.

In the illustrated embodiment, the axial thrust element 25 is connected to the respective pin 227b of the transmission element 227 by means of an articulation connecting rod 228.

In use, the apparatus 1 as described above allows implementing a process for building tyres for vehicles according to the present invention.

It is observed that in the description of the process, the same reference numbers used up to now in the description of the apparatus will be used for the same technical characteristics.

In each case, it is indicated that all of the characteristics of the apparatus, even if not explicitly identified or used in the following description of the process, are to be considered as related thereto.

The process provides for providing the forming drum 2 and the movement unit 7, provided with the holding device 8.

In order to allow the coupling between the rotating shaft 4 and the holding device 8, the second element 15 of the rotatable body 11 is positioned in the second axial position with respect to the first element 13.

In other words, the actuator 19 is actuated so as to oppose the action of the elastic elements 18, moving the gripping unit 17 into the rest position.

At this point, the rotating shaft 4 of the forming drum 2 is axially inserted in the housing axial seat 14 of the first element 13 of the rotatable body 11.

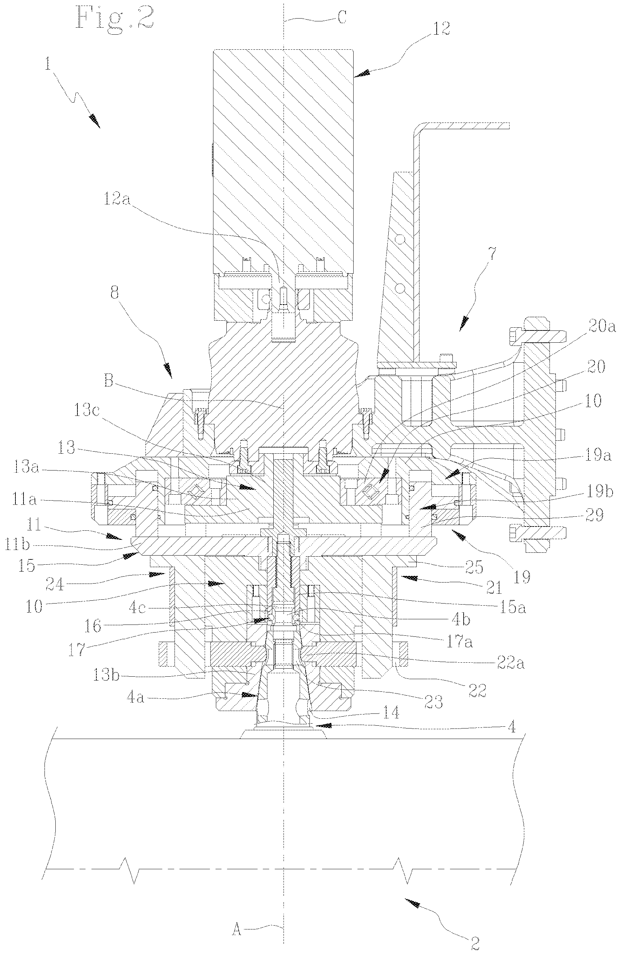

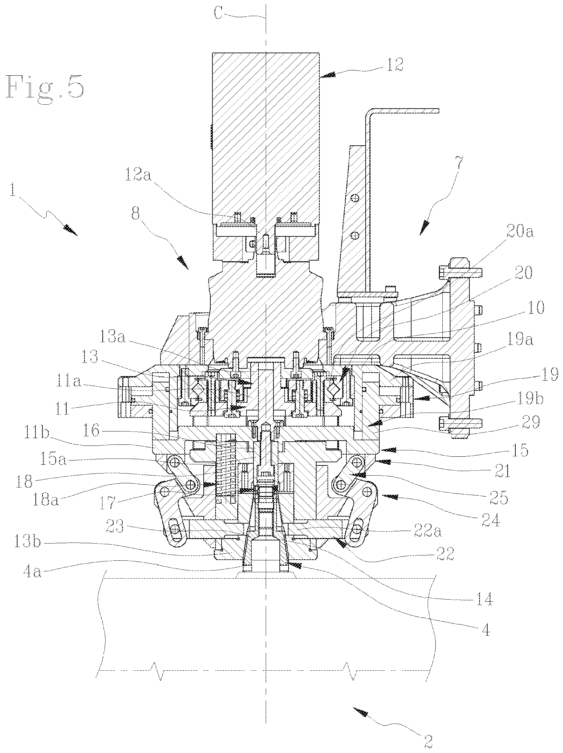

The axial travel of the rotating shaft 4, i.e. of its free end 4a, within the housing axial seat 14 continues until a gripping position (figures 2 and 5) is reached in proximity to the holding member 15a for holding the second element 15.

In particular, the axial travel of the rotating shaft 4 continues until the free end 4a is at least partly inserted in the collar 16. An angular positioning is also provided between the rotating shaft 4 of the forming drum 2 and the first element 13 rotatable body 11.

Indeed, the rotating shaft 4 and the housing axial seat 14 are mutually couplable according to a predetermined angular orientation around the rotation axis "B".

Preferably, in order to facilitate the insertion of the rotating shaft 4, the angular positioning comprises a preliminary positioning and a precision positioning or "fine" positioning.

In the preliminary positioning, the rotating shaft 4 and the movement unit 7 are angularly rotated with respect to each other around said rotation axis "B" in order to move the radial slot 23 to an angular position approximately corresponding to an angular position of said radial pin 22.

In the precision positioning, as will be better clarified hereinbelow, the radial slot 23 and the radial pin 22 are mutually aligned along a radial direction in order to allow the insertion of the radial pin 22 itself.

Preferably, the precision positioning is carried out when the second element 15 of the rotatable body 11 is situated in an intermediate position between the second axial position and the first axial position.

More precisely, the second element 15 moves the radial pin 22 by means of the actuation mechanism 24, and simultaneously the second element 15 is displaced with respect to the first element 13 from the second axial position to the first axial position.

More precisely, the process provides for actuating the actuator 19 in opposition to the elastic retention elements 18; preferably, the moveable portion 19a of the actuator is extracted from the fixed portion 19b up to contacting and axially pushing the second element 15 of the rotatable body 11.

In such a manner, the rotating shaft 4 of the forming drum 2 is tightened in the housing axial seat 14.

In order to ensure the rotational coupling, i.e. the maintenance of the angular positioning, the radial pin 22 is inserted along a radial direction in the radial slot 23 of the rotating shaft 4.

More precisely, the radial pin 22 is radially inserted in the first element 13 of the rotatable body 11 and in the radial slot 23.

It is observed that, preferably, the radial pin 22 is radially moved at the same time as the axial displacement of the second element 15 of the rotatable body 11.

In particular, the radial pin 22 is inserted into the slit 23 of the rotating shaft 4 when the second element 15 is situated in a intermediate position between the second axial position and the first axial position.

Therefore, the precision positioning is carried out by the radial pin 22 during its insertion in the radial slot 23.

In order to facilitate such precision positioning, as already mentioned above, the radial pin 22 is at least partly smoothed or tapered at the end portion 22a portion.

Therefore, the precision positioning is carried out during the radial displacement of the radial pin 22 by means of mechanical interference between the smoothed end portion 22a of the radial pin 22 and an outer edge, preferably flared, of the radial slot 23. Once the positioning has ended, the radial pin 22 or the radial pins 22 have been inserted and the rotating shaft 14 has been tightened in the housing axial seat 14, it is possible to drive the forming drum 2 in rotation by means of said movement unit 7 in order to build, on the outer surface 3, at least one portion of a tyre component, preferably by means of the deposition of at least one elementary semifinished product.

The movement unit 7, with the forming drum 2 tightened and rotatably constrained, can then be conveyed through one or more building stations.

## Claims

1. Apparatus for building tyres, comprising:
- a forming drum (2) comprising an outer surface (3) extending around a central axis (A) and a rotating shaft (4) extending along said central axis (A) up to a free end (4a);
- a processing unit (6) operatively active on said outer surface (3);
- a movement unit (7) for displacing said forming drum (2) provided with at least one holding device (8) comprising
a fixed body (10);
a rotatable body (11) rotatably connected to said fixed body (10) so as to rotate around a rotation axis (B) corresponding, in use, to said central axis (A);
a motor (12) coupled to said rotatable body (11) to drive it in rotation around said rotation axis (B);
wherein said rotatable body (11) comprises:
- a first element (13) extending along said rotation axis (B) between a first axial end (13a), rotatably connected to the fixed body (10), and a second axial end (13b) provided with a housing axial seat (14) configured for receiving the rotating shaft (4) of said forming drum (2),
- a second element (15) provided with at least one holding member (15a) for holding said rotating shaft (4), said second element (15) being moveable with respect to the first element (13) between a first axial position, in which it holds said rotating shaft (4), and a second axial position, in which it releases said rotating shaft (4),
**characterized in that** said rotatable body (11) comprises at least one elastic retention element (18) operatively interposed between said first element (13) and said second element (15) and configured to keep the second element (15) in said first axial position;
wherein the holding device (8) comprises an actuator (19) operating between the first element (13) and the second element (15) and configured to oppose said at least one elastic retention element (18) and displace said second element (15) from the first axial position to the second axial position;
and wherein the holding device (8) comprises at least one anti-rotation unit (21) selectively displaceable between an active condition, in which it rotatably constrains said rotating shaft (4) of the forming drum (2) and said first element (13) of the rotatable body (11), and a passive condition, in which it does not interfere with said rotating shaft (4) of the forming drum (2).

2. Apparatus according to claim 1, wherein said anti-rotation unit (21) comprises at least one radial pin (22) slidably inserted into the first element (13) of the rotatable body (11) to move between a radially extracted position, corresponding to said passive condition, and a radially inserted position, corresponding to said active condition.

3. Apparatus according to claim 2, wherein the anti-rotation unit (21) comprises an actuation mechanism (24) associated with said radial pin (22) to displace it between the radially extracted position and the radially inserted position, wherein the actuation mechanism (24) is configured to displace the radial pin (22) from the radially extracted position to the radially inserted position during the axial displacement of the second element (15) of the rotatable body (11) from the second axial position to the first axial position.

4. Apparatus according to claim 3, wherein the actuation mechanism (24) comprises at least one axial thrust element (25) associated with said second element (15) of the rotatable body (11) and connected to the radial pin (22) so that an axial translation of the axial thrust element (25) imparts a radial translation to said radial pin (22).

5. Apparatus according to one or more of claims 2 to 4, wherein said rotating shaft (4) of the forming drum (2) has at least one radial slot (23) shaped to receive an end portion (22a) of the radial pin (22) therein.

6. Apparatus according to one or more of the preceding claims, wherein the motor (12) of the holding device (8) comprises a rotor (12b) coaxial with a stator (12a) and rigidly constrained to the first element (13) of the rotatable body (11), coaxially thereto.

7. Apparatus according to claim 6, wherein the rotatable body (11) extends radially, moving away from the rotation axis (B) between a central portion (11a) and a peripheral portion (11b), radially external with respect to said central portion (11a); said motor (12) being constrained to the first element (13) at the central portion (11a) and the actuator (19) being operatively active on the second element (15) at the peripheral portion (11b).

8. Apparatus according to one or more of the preceding claims, wherein said actuator (19) comprises one or more pushing elements (29) axially moveable between an operative position and an inoperative position, in which they are axially spaced from said second element (15).

9. Apparatus according to one or more of the preceding claims, wherein the rotatable body (11) of the holding device (8) is rotatably coupled to the fixed body (10) by means of at least one bearing or thrust bearing (20a); said first element (13) of the rotatable body (11) being arranged cantilevered with respect to said bearing or thrust bearing (20a).

10. Process for building tyres, comprising:
- providing a forming drum (2) comprising an outer surface (3) extending around a central axis (A) and a rotating shaft (4) extending along said central axis (A) up to a free end (4a);
- providing a movement unit (7) for displacing said forming drum (2) provided with at least one holding device (8) comprising a rotatable body (11) rotating around a rotation axis (B); said rotatable body comprising:
a first element (13) provided with a housing axial seat (14) configured for receiving the rotating shaft (4) of said forming drum (2),
a second element (15) provided with at least one holding member (15a) for holding said rotating shaft (4) moveable with respect to the first element between a first axial position, in which it holds said rotating shaft (4), and a second axial position, in which it releases said rotating shaft (4);
- positioning the second element (15), with respect to the first element (13), in the second axial position;
- inserting the rotating shaft (4) of the forming drum (2) into the housing axial seat (14) of the first element (13) of the rotatable body (11) up to reaching a position for gripping by said holding member (15a);
- displacing the second element (15) with respect to the first element (13) from the second axial position to the first axial position so as to tighten the rotating shaft (4) of the forming drum (2) in the housing axial seat (14);
- displacing an anti-rotation unit (21) comprised in the holding device (8), from a passive condition in which it does not interfere with the rotating shaft (4) of the forming drum (2) to an active condition in which it rotatably constrains said rotating shaft (4) of the forming drum (2) and said first element (13) of the rotatable body (11);
- driving said forming drum (2) in rotation by means of said movement unit to build at least one portion of a component of a tyre on said outer surface (3).

11. Process according to claim 10, wherein the action of displacing said anti-rotation unit (21) from said passive condition to said active condition occurs by inserting - along a radial direction - at least one radial pin (22) into the first element (13) of the rotatable body (11) and into at least one radial slot (23) of the rotating shaft (4) of the forming drum (2).

12. Process according to claim 11, wherein the radial pin (22) is inserted into the first element (13) and into the rotating shaft (4) when the second element (15) is in an intermediate position between the second and the first position.

13. Process according to claim 11 or 12, comprising an angular positioning between the rotating shaft (4) of the forming drum (2) and the first element (13) of the rotatable body (11), wherein the angular positioning comprises:
- a preliminary positioning, wherein the rotating shaft (4) and the movement unit (7) are angularly rotated with respect to each other around said rotation axis (B) to move said radial slot (23) to an angular position approximately corresponding to an angular position of said radial pin (22);
- a precision positioning wherein said radial slot (23) and said radial pin (22) are mutually aligned along a radial direction.

14. Process according to claim 13, wherein the precision positioning is carried out during the radial displacement of the radial pin (22) by means of mechanical interference between a bevelled end portion (22a) of the radial pin (22) and an outer edge of the radial slot (23).

15. Holding device (8) for holding a forming drum (2) in an apparatus (1) for building tyres, said a forming drum (2) comprising an outer surface (3) extending around a central axis (A) and a rotating shaft (4) extending along said central axis (A) up to a free end (4a), wherein the holding device (8) comprises:
- a fixed body (10);
- a rotatable body (11) rotatably connected to said fixed body (10) so as to rotate around a rotation axis (B);
- a motor (12) coupled to said rotatable body to drive it in rotation around said rotation axis (B);
wherein said rotatable body (11) comprises
- a first element (13) extending along said rotation axis (B) between a first axial end (13a), rotatably connected to the fixed body (10), and a second axial end (13b) provided with a housing axial seat (14) configured for receiving the rotating shaft (4) of said forming drum (2),
- a second element (15) provided with at least one holding member (15a) for holding said rotating shaft (4), said second element (15) being moveable with respect to the first element (13) between a first axial position, in which it is configured to hold said rotating shaft (4), and a second axial position, in which it is configured to release said rotating shaft (4);
**characterized in that** said rotatable body (11) comprises at least one elastic retention element (18) operatively interposed between said first element (13) and second element (15) and configured to keep said second element (15) in said first axial position
and **in that** said holding device (8) comprises an actuator (19) operating between the first element (13) and the second element (15) of the rotatable body (11) and configured to oppose said at least one elastic retention element (18) and displace said second element (15) from the first axial position to the second axial position;
wherein the holding device (8) comprises at least one anti-rotation unit (21) selectively displaceable between an active condition, in which it is configured to rotatably constrain said rotating shaft (4) of the forming drum (2) and said first element (13) of the rotatable body (11), and a passive condition, in which it is configured not to interfere with said rotating shaft (4) of the forming drum (2).

## Patentansprüche

1. Vorrichtung zum Herstellen von Reifen, umfassend:
- eine Formtrommel (2), die eine Außenfläche (3), die sich um eine Mittelachse (A) erstreckt, und eine Drehwelle (4) umfasst, die sich entlang der Mittelachse (A) bis zu einem freien Ende (4a) erstreckt;
- eine Verarbeitungseinheit (6), die funktionell auf die Außenfläche (3) wirkt;
- eine Bewegungseinheit (7) zum Verschieben der Formtrommel (2), die mit mindestens einer Halteeinrichtung (8) versehen ist, die umfasst:
einen unbeweglichen Körper (10);
einen drehbaren Körper (11), der drehbar mit dem unbeweglichen Körper (10) verbunden ist, um sich um eine Drehachse (B) zu drehen, die in Gebrauch der Mittelachse (A) entspricht;
einen Motor (12), der mit dem drehbaren Körper (11) gekoppelt ist, um ihn in Drehung um die Drehachse (B) anzutreiben;
wobei der drehbare Körper (11) umfasst:
- ein erstes Element (13), das sich zwischen einem ersten axialen Ende (13a), das drehbar mit dem unbeweglichen Körper (10) verbunden ist, und einem zweiten axialen Ende (13b), das mit einem axialen Aufnahmesitz (14) versehen ist, der zur Aufnahme der Drehwelle (4) der Formtrommel (2) ausgelegt ist, entlang der Drehachse (B) erstreckt,
- ein zweites Element (15), das mit mindestens einem Halteelement (15a) zum Halten der Drehwelle (4) versehen ist, wobei das zweite Element (15) in Bezug auf das erste Element (13) zwischen einer ersten axialen Position, in der es die Drehwelle (4) hält, und einer zweiten axialen Position, in der es die Drehwelle (4) freigibt, bewegt werden kann,
**dadurch gekennzeichnet, dass** der drehbare Körper (11) mindestens ein elastisches Rückhalteelement (18) umfasst, das funktionell zwischen dem ersten Element (13) und dem zweiten Element (15) eingefügt und zum Halten des zweiten Elements (15) in der ersten axialen Position ausgelegt ist;
wobei die Halteeinrichtung (8) einen Aktor (19) umfasst, der zwischen dem ersten Element (13) und dem zweiten Element (15) wirkt und so ausgelegt ist, dass er dem mindestens einen elastischen Rückhalteelement (18) entgegenwirkt und das zweite Element (15) von der ersten axialen Position in die zweite axiale Position verschiebt;
und wobei die Halteeinrichtung (8) mindestens eine Drehsicherungseinheit (21) umfasst, die selektiv zwischen einem aktiven Zustand, in dem sie die Drehwelle (4) der Formtrommel (2) und das erste Element (13) des drehbaren Körpers (11) drehbeschränkt, und einem passiven Zustand, in dem sie die Drehwelle (4) der Formtrommel (2) nicht beeinflusst, verschoben werden kann.

2. Vorrichtung nach Anspruch 1, wobei die Drehsicherungseinheit (21) mindestens einen radialen Stift (22) umfasst, der verschiebbar in das erste Element (13) des drehbaren Körpers (11) eingeführt ist, um sich zwischen einer radial extrahierten Position, die dem passiven Zustand entspricht, und einer radial eingeführten Position zu bewegen, die dem aktiven Zustand entspricht.

3. Vorrichtung nach Anspruch 2, wobei die Drehsicherungseinheit (21) einen Betätigungsmechanismus (24) umfasst, der mit dem radialen Stift (22) assoziiert ist, um ihn zwischen der radial extrahierten Position und der radial eingeführten Position zu verschieben, wobei der Betätigungsmechanismus (24) so ausgelegt ist, dass er den radialen Stift (22) während der axialen Verschiebung des zweiten Elements (15) des drehbaren Körpers (11) von der zweiten axialen Position in die erste axiale Position von der radial extrahierten Position in die radial eingeführte Position verschiebt.

4. Vorrichtung nach Anspruch 3, wobei der Betätigungsmechanismus (24) mindestens ein Axialdruckelement (25) umfasst, das mit dem zweiten Element (15) des drehbaren Körpers (11) assoziiert und mit dem radialen Stift (22) verbunden ist, sodass eine axiale Translation des Axialdruckelements (25) dem radialen Stift (22) eine radiale Translation vermittelt.

5. Vorrichtung nach einem der Ansprüche 2 bis 4, wobei die Drehwelle (4) der Formtrommel (2) mindestens einen radialen Schlitz (23) aufweist, der zum Aufnehmen eines Endabschnitts (22a) des radialen Stifts (22) darin geformt ist.

6. Vorrichtung nach einem der vorhergehenden Ansprüche, wobei der Motor (12) der Halteeinrichtung (8) einen Rotor (12b) umfasst, der koaxial mit einem Stator (12a) ist und koaxial dazu starr am ersten Element (13) des drehbaren Körpers (11) befestigt ist.

7. Vorrichtung nach Anspruch 6, wobei der drehbare Körper (11) sich radial erstreckt und sich von der Drehachse (B) weg zwischen einem Mittelabschnitt (11a) und einem Randabschnitt (11b) radial extern in Bezug auf den Mittelabschnitt (11a) bewegt; der Motor (12) am ersten Element (13) am Mittelabschnitt (11a) befestigt ist und der Aktor (19) funktionell auf das zweite Element (15) am Randabschnitt (11b) wirkt.

8. Vorrichtung nach einem der vorhergehenden Ansprüche, wobei der Aktor (19) ein oder mehrere Schubelemente (29) umfasst, die axial zwischen einer Betriebsposition und einer Ruheposition, in der sie vom zweiten Element (15) axial beabstandet sind, bewegt werden können.

9. Vorrichtung nach einem der vorhergehenden Ansprüche, wobei der drehbare Körper (11) der Halteeinrichtung (8) mittels mindestens eines Lagers oder Drucklagers (20a) drehbar mit dem unbeweglichen Körper (10) gekoppelt ist; das erste Element (13) des drehbaren Körpers (11) in Bezug auf das Lager oder Drucklager (20a) ausladend angeordnet ist.

10. Prozess zur Herstellung von Reifen, umfassend:
- Bereitstellen einer Formtrommel (2), die eine Außenfläche (3), die sich um eine Mittelachse (A) erstreckt, und eine Drehwelle (4) umfasst, die sich entlang der Mittelachse (A) bis zu einem freien Ende (4a) erstreckt;
- Bereitstellen einer Bewegungseinheit (7) zum Verschieben der Formtrommel (2), die mit mindestens einer Halteeinrichtung (8) versehen ist, die einen drehbaren Körper (11) umfasst, der sich um eine Drehachse (B) dreht; wobei der drehbare Körper umfasst:
ein erstes Element (13), das mit einem axialen Aufnahmesitz (14) versehen ist, der zur Aufnahme der Drehwelle (4) der Formtrommel (2) ausgelegt ist,
ein zweites Element (15), das mit mindestens einem Halteelement (15a) versehen ist, um die Drehwelle (4) in Bezug auf das erste Element zwischen einer ersten axialen Position, in der es die Drehwelle (4) hält, und einer zweiten axialen Position, in der es die Drehwelle (4) freigibt, beweglich zu halten;
- Positionieren des zweiten Elements (15) in Bezug auf das erste Element (13) in der zweiten axialen Position;
- Einführen der Drehwelle (4) der Formtrommel (2) in den axialen Aufnahmesitz (14) des ersten Element (13) des drehbaren Körpers (11), bis eine Position zum Ergreifen des Halteelements (15a) erreicht wird;
- Verschieben des zweiten Elements (15) in Bezug auf das erste Element (13) von der zweiten axialen Position in die erste axiale Position, um die Drehwelle (4) der Formtrommel (2) im axialen Aufnahmesitz (14) zu befestigen;
- Verschieben einer Drehsicherungseinheit (21), die in der Halteeinrichtung (8) umfasst ist, aus einem passiven Zustand, in dem sie die Drehwelle (4) der Formtrommel (2) nicht beeinflusst, in einen aktiven Zustand, in dem sie die Drehwelle (4) der Formtrommel (2) und das erste Element (13) des drehbaren Körpers (11) drehbeschränkt;
- Antreiben der Formtrommel (2) in Drehung mittels der Bewegungseinheit, um zumindest einen Teil einer Komponente eines Reifens auf der Außenfläche (3) herzustellen.

11. Prozess nach Anspruch 10, wobei die Wirkung der Verschiebung der Drehsicherungseinheit (21) aus dem passiven Zustand in den aktiven Zustand durch Einführen mindestens eines radialen Stifts (22) entlang einer radialen Richtung in das erste Element (13) des drehbaren Körpers (11) und in mindestens einen radialen Schlitz (23) der Drehwelle (4) der Formtrommel (2) erfolgt.

12. Prozess nach Anspruch 11, wobei der radiale Stift (22) in das erste Element (13) und in die Drehwelle (4) eingeführt wird, wenn das zweite Element (15) in einer Zwischenposition zwischen der ersten und der zweiten Position ist.

13. Prozess nach Anspruch 11 oder 12, umfassend eine Winkelpositionierung zwischen der Drehwelle (4) der Formtrommel (2) und dem ersten Element (13) des drehbaren Körpers (11), wobei die Winkelpositionierung umfasst:
- eine Vorpositionierung, wobei die Drehwelle (4) und die Bewegungseinheit (7) in Bezug aufeinander winkelig um die Drehachse (B) gedreht werden, um den radialen Schlitz (23) in eine Winkelposition zu bewegen, die ungefähr einer Winkelposition des radialen Stifts (22) entspricht;
- eine Präzisionspositionierung, wobei der radiale Schlitz (23) und der radiale Stift (22) entlang der radialen Richtung miteinander ausgerichtet sind.

14. Prozess nach Anspruch 13, wobei die Präzisionspositionierung während der radialen Verschiebung des radialen Stifts (22) mittels mechanischen Eingriffs zwischen einem abgeschrägten Endabschnitt (22a) der radialen Stifts (22) und einer Außenkante des radialen Schlitzes (23) erfolgt.

15. Halteeinrichtung (8) zum Halten einer Formtrommel (2) in einer Vorrichtung (1) zum Herstellen von Reifen, wobei die Formtrommel (2) eine Außenfläche (3), die sich um eine Mittelachse (A) erstreckt, und eine Drehwelle (4) umfasst, die sich entlang der Mittelachse (A) bis zu einem freien Ende (4a) erstreckt, wobei die Halteeinrichtung (8) umfasst:
- einen unbeweglichen Körper (10);
- einen drehbaren Körper (11), der drehbar mit dem unbeweglichen Körper (10) verbunden ist, um sich um eine Drehachse (B) zu drehen;
- einen Motor (12), der mit dem drehbaren Körper gekoppelt ist, um ihn in Drehung um die Drehachse (B) anzutreiben;
wobei der drehbare Körper (11) umfasst:
- ein erstes Element (13), das sich zwischen einem ersten axialen Ende (13a), das drehbar mit dem unbeweglichen Körper (10) verbunden ist, und einem zweiten axialen Ende (13b), das mit einem axialen Aufnahmesitz (14) versehen ist, der zur Aufnahme der Drehwelle (4) der Formtrommel (2) ausgelegt ist, entlang der Drehachse (B) erstreckt,
- ein zweites Element (15), das mit mindestens einem Halteelement (15a) zum Halten der Drehwelle (4) versehen ist, wobei das zweite Element (15) in Bezug auf das erste Element (13) zwischen einer ersten axialen Position, in der es so ausgelegt ist, dass es die Drehwelle (4) hält, und einer zweiten axialen Position, in der es so ausgelegt ist, dass es die Drehwelle (4) freigibt, bewegt werden kann;
**dadurch gekennzeichnet, dass** der drehbare Körper (11) mindestens ein elastisches Rückhalteelement (18) umfasst, das funktionell zwischen dem ersten Element (13) und dem zweiten Element (15) eingefügt und zum Halten des zweiten Elements (15) in der ersten axialen Position ausgelegt ist,
und dadurch, dass die Halteeinrichtung (8) einen Aktor (19) umfasst, der zwischen dem ersten Element (13) und dem zweiten Element (15) des drehbaren Körpers (11) wirkt und so ausgelegt ist, dass er dem mindestens einen elastischen Rückhalteelement (18) entgegenwirkt und das zweite Element (15) von der ersten axialen Position in die zweite axiale Position verschiebt;
wobei die Halteeinrichtung (8) mindestens eine Drehsicherungseinheit (21) umfasst, die selektiv zwischen einem aktiven Zustand, in dem sie so ausgelegt ist, dass sie die Drehwelle (4) der Formtrommel (2) und das erste Element (13) des drehbaren Körpers (11) drehbeschränkt, und einem passiven Zustand, in dem sie so ausgelegt ist, dass sie die Drehwelle (4) der Formtrommel (2) nicht beeinflusst, verschoben werden kann.

## Revendications

1. Appareil de construction de pneus, comprenant
- un tambour de formation (2) comprenant une surface externe (3) s'étendant autour d'un axe central (A) et un arbre rotatif (4) s'étendant le long dudit axe central (A) jusqu'à une extrémité libre (4a) ;
- une unité de traitement (6) fonctionnellement active sur ladite surface externe (3) ;
- une unité de déplacement (7) pour déplacer ledit tambour de formation (2) munie d'au moins un dispositif de maintien (8) comprenant
un corps fixe (10) ;
un corps rotatif (11) relié en rotation audit corps fixe (10) de manière à tourner autour d'un axe de rotation (B) correspondant, en cous d'utilisation, audit axe central (A) ;
un moteur (12) couplé audit corps rotatif (11) pour l'entraîner en rotation autour dudit axe de rotation (B) ;
dans lequel ledit corps rotatif (11) comprend :
- un premier élément (13) s'étendant le long dudit axe de rotation (B) entre une première extrémité axiale (13a), reliée en rotation au corps fixe (10), et une deuxième extrémité axiale (13b) munie d'un siège axial de logement (14) configuré pour recevoir l'arbre rotatif (4) dudit tambour de formation (2),
- un deuxième élément (15) pourvu d'au moins un organe de maintien (15a) pour maintenir ledit arbre rotatif (4), ledit deuxième élément (15) étant mobile par rapport au premier élément (13) entre une première position axiale, dans laquelle il maintient ledit arbre rotatif (4), et une deuxième position axiale, dans laquelle il libère ledit arbre rotatif (4),
**caractérisé en ce que** ledit corps rotatif (11) comprend au moins un élément de retenue élastique (18) interposé fonctionnellement entre ledit premier élément (13) et ledit deuxième élément (15) et configuré pour garder le deuxième élément (15) dans ladite première position axiale ;
dans lequel le dispositif de maintien (8) comprend un actionneur (19) fonctionnant entre le premier élément (13) et le deuxième élément (15) et configuré pour s'opposer audit au moins un élément de retenue élastique (18) et déplacer ledit deuxième élément (15) de la première position axiale à la deuxième position axiale ;
et dans lequel le dispositif de maintien (8) comprend au moins une unité anti-rotation (21) pouvant se déplacer sélectivement entre un état actif, dans lequel elle contraint en rotation ledit arbre rotatif (4) du tambour de formation (2) et ledit premier élément (13) du corps rotatif (11), et un état passif, dans lequel elle n'interfère pas avec ledit arbre rotatif (4) du tambour de formation (2).

2. Appareil selon la revendication 1, dans lequel ladite unité anti-rotation (21) comprend au moins une goupille radiale (22) insérée de manière coulissante dans le premier élément (13) du corps rotatif (11) pour se déplacer entre une position radialement extraite, correspondant audit état passif, et une position radialement insérée, correspondant audit état actif.

3. Dispositif selon la revendication 2, dans lequel l'unité anti-rotation (21) comprend un mécanisme d'actionnement (24) associé à ladite goupille radiale (22) pour la déplacer entre la position radialement extraite et la position radialement insérée, dans lequel le mécanisme d'actionnement (24) est configuré pour déplacer la goupille radiale (22) de la position radialement extraite à la position radialement insérée lors du déplacement axial du deuxième élément (15) du corps rotatif (11) de la deuxième position axiale à la première position axiale.

4. Appareil selon la revendication 3, dans lequel le mécanisme d'actionnement (24) comprend au moins un élément de poussée axiale (25) associé audit deuxième élément (15) du corps rotatif (11) et relié à la goupille radiale (22) de sorte qu'une translation axiale de l'élément de poussée axiale (25) confère une translation radiale à ladite goupille radiale (22).

5. Appareil selon une ou plusieurs des revendications 2 à 4, dans lequel ledit arbre rotatif (4) du tambour de formation (2) a au moins une fente radiale (23) conformée pour recevoir une partie d'extrémité (22a) de la goupille radiale (22) dans celle-ci.

6. Appareil selon une ou plusieurs des revendications précédentes, dans lequel le moteur (12) du dispositif de maintien (8) comprend un rotor (12b) coaxial à un stator (12a) et rigidement contraint au premier élément (13) du corps rotatif (11), de manière coaxiale à celui-ci.

7. Appareil selon la revendication 6, dans lequel le corps rotatif (11) s'étend radialement, en s'éloignant de l'axe de rotation (B) entre une partie centrale (11a) et une partie périphérique (11b), radialement extérieure par rapport à ladite partie centrale (11a) ; ledit moteur (12) étant contraint au premier élément (13) au niveau de la partie centrale (11a) et l'actionneur (19) étant fonctionnellement actif sur le deuxième élément (15) au niveau de la partie périphérique (11b).

8. Appareil selon une ou plusieurs des revendications précédentes, dans lequel ledit actionneur (19) comprend un ou plusieurs éléments de poussée (29) mobiles axialement entre une position fonctionnelle et une position non fonctionnelle, dans laquelle ils sont espacés axialement dudit deuxième élément (15).

9. Appareil selon une ou plusieurs des revendications précédentes, dans lequel le corps rotatif (11) du dispositif de maintien (8) est couplé en rotation au corps fixe (10) au moyen d'au moins un palier ou palier de butée (20a) ; ledit premier élément (13) du corps rotatif (11) étant agencé en porte-à-faux par rapport audit palier ou palier de butée (20a).

10. Procédé de construction de pneus, comprenant :
- la fourniture d'un tambour de formation (2) comprenant une surface externe (3) s'étendant autour d'un axe central (A) et un arbre rotatif (4) s'étendant le long dudit axe central (A) jusqu'à une extrémité libre (4a) ;
- la fourniture d'une unité de déplacement (7) pour déplacer ledit tambour de formation (2) munie d'au moins un dispositif de maintien (8) comprenant un corps rotatif (11) tournant autour d'un axe de rotation (B) ; ledit corps rotatif comprenant :
un premier élément (13) muni d'un siège axial de logement (14) configuré pour recevoir l'arbre rotatif (4) dudit tambour de formation (2),
un deuxième élément (15) muni d'au moins un élément de maintien (15a) pour maintenir ledit arbre rotatif (4) mobile par rapport au premier élément entre une première position axiale, dans laquelle il maintient ledit arbre rotatif (4), et une deuxième position axiale, dans laquelle il libère ledit arbre rotatif (4) ;
- le positionnement du deuxième élément (15), par rapport au premier élément (13), dans la deuxième position axiale ;
- l'insertion de l'arbre rotatif (4) du tambour de formation (2) dans le siège axial de logement (14) du premier élément (13) du corps rotatif (11) jusqu'à atteindre une position de préhension par ledit élément de maintien (15a) ;
- le déplacement du deuxième élément (15) par rapport au premier élément (13) de la deuxième position axiale à la première position axiale de manière à serrer l'arbre rotatif (4) du tambour de formation (2) dans le siège axial de logement (14) ;
- le déplacement d'une unité anti-rotation (21) comprise dans le dispositif de maintien (8), d'un état passif dans lequel elle n'interfère pas avec l'arbre rotatif (4) du tambour de formation (2) à un état actif dans lequel elle contraint en rotation ledit arbre rotatif (4) du tambour de formation (2) et ledit premier élément (13) du corps rotatif (11) ;
- l'entraînement dudit tambour de formation (2) en rotation au moyen de ladite unité de déplacement pour construire au moins une partie d'un composant d'un pneu sur ladite surface externe (3).

11. Procédé selon la revendication 10, dans lequel l'action de déplacement de ladite unité anti-rotation (21) dudit état passif audit état actif se produit en insérant - le long d'une direction radiale - au moins une goupille radiale (22) dans le premier élément (13) du corps rotatif (11) et dans au moins une fente radiale (23) de l'arbre rotatif (4) du tambour de formation (2).

12. Procédé selon la revendication 11, dans lequel la goupille radiale (22) est insérée dans le premier élément (13) et dans l'arbre rotatif (4) lorsque le deuxième élément (15) est dans une position intermédiaire entre les deuxième et première positions.

13. Procédé selon la revendication 11 ou 12, comprenant un positionnement angulaire entre l'arbre rotatif (4) du tambour de formation (2) et le premier élément (13) du corps rotatif (11), dans lequel le positionnement angulaire comprend :
- un positionnement préliminaire, dans lequel l'arbre rotatif (4) et l'unité de déplacement (7) sont tournés angulairement l'un par rapport à l'autre autour dudit axe de rotation (B) pour déplacer ladite fente radiale (23) vers une position angulaire correspondant approximativement à une position angulaire de ladite goupille radiale (22) ;
- un positionnement de précision dans lequel ladite fente radiale (23) et ladite goupille radiale (22) sont mutuellement alignées le long d'une direction radiale.

14. Procédé selon la revendication 13, dans lequel le positionnement de précision est réalisé lors du déplacement radial de la goupille radiale (22) au moyen d'une interférence mécanique entre une partie d'extrémité biseautée (22a) de la goupille radiale (22) et un bord externe de la fente radiale (23).

15. Dispositif de maintien (8) pour maintenir un tambour de formation (2) dans un appareil (1) de construction de pneus, ledit tambour de formation (2) comprenant une surface externe (3) s'étendant autour d'un axe central (A) et un arbre rotatif (4) s'étendant le long dudit axe central (A) jusqu'à une extrémité libre (4a), dans lequel le dispositif de maintien (8) comprend :
- un corps fixe (10) ;
- un corps rotatif (11) relié en rotation audit corps fixe (10) de manière à tourner autour d'un axe de rotation (B) ;
- un moteur (12) couplé audit corps rotatif pour l'entraîner en rotation autour dudit axe de rotation (B) ;
dans lequel ledit corps rotatif (11) comprend
- un premier élément (13) s'étendant le long dudit axe de rotation (B) entre une première extrémité axiale (13a), reliée en rotation au corps fixe (10), et une deuxième extrémité axiale (13b) munie d'un siège axial de logement (14) configuré pour recevoir l'arbre rotatif (4) dudit tambour de formation (2),
- un deuxième élément (15) muni d'au moins un organe de maintien (15a) pour maintenir ledit arbre rotatif (4), ledit deuxième élément (15) étant mobile par rapport au premier élément (13) entre une première position axiale, dans laquelle il est configuré pour maintenir ledit arbre rotatif (4), et une deuxième position axiale, dans laquelle il est configuré pour libérer ledit arbre rotatif (4) ;
**caractérisé en ce que** ledit corps rotatif (11) comprend au moins un élément de retenue élastique (18) interposé fonctionnellement entre lesdits premier élément (13) et deuxième élément (15) et configuré pour garder ledit deuxième élément (15) dans ladite première position axiale
et **en ce que** ledit dispositif de maintien (8) comprend un actionneur (19) fonctionnant entre le premier élément (13) et le deuxième élément (15) du corps rotatif (11) et configuré pour s'opposer audit au moins un élément de retenue élastique (18) et déplacer ledit deuxième élément (15) de la première position axiale à la deuxième position axiale ;
dans lequel le dispositif de maintien (8) comprend au moins une unité anti-rotation (21) pouvant se déplacer sélectivement entre un état actif, dans lequel elle est configurée pour contraindre en rotation ledit arbre rotatif (4) du tambour de formation (2) et ledit premier élément (13) du corps rotatif (11), et un état passif, dans lequel elle est configurée pour ne pas interférer avec ledit arbre rotatif (4) du tambour de formation (2).
